# EUROPEAN PATENT SPECIFICATION

(11) **EP 4 488 168 B1**
(45) Date of publication and mention of the grant of the patent: **16.09.2026**
(21) Application number: 24187189.6
(22) Date of filing: 08.07.2024
(51) Int. Cl.: B64C 1/14, B64D 11/06

(54) **BUSINESS CLASS SUITES WITH INTERIOR WINDOW AND ILLUMINATED WINDOW SHADE**
BUSINESS-KLASSE SUITE MIT INNENFENSTER UND BELEUCHTETEM FENSTERVORHANG
SUITES DE CLASSES COMMERCIALES AVEC FENÊTRE INTÉRIEURE ET STORE DE FENÊTRE ÉCLAIRÉ

(30) Priority: 07.07.2023 US 202318219385
(43) Date of publication of application: 08.01.2025
(73) Proprietor: B/E Aerospace, Inc., Winston-Salem, NC 27105 (US)
(72) Inventor: LARA, Oscar Ruiz, Kirkland, WA (US); VANINETTI, Travis J., Bothell, WA, 98011 (US); FINLAY, Travis K., Winston-Salem, NC, 27106 (US); ADCOCK, Christopher D., Advance, NC, 27006 (US)
(74) Representative: Dehns

(56) References cited:
- EP-A1- 3 696 086
- EP-B1- 3 225 548
- WO-A1-2011/030284
- WO-A1-2020/055848
- US-A1- 2007 186 477
- US-A1- 2017 283 065
- US-B2- 7 690 414

## Description

### TECHNICAL FIELD AND BACKGROUND

The present disclosure relates generally to cabin configurations for passenger vehicles such as airliners, and more particularly, to business class suites including an interior window having a window shade configured to be illuminated when the window shade is closed to emulate natural light originating from behind the window.

Airliners and other conveyances typically include passenger cabins with different seating classes. For example, economy class cabins may include seat rows arranged to maximize seat density at the expense of privacy, whereas premium class cabins (e.g., business class) may include separate seats optimized to enhance privacy and comfort at the expense of seat density. Passenger seating or cabin areas are disclosed in EP 3 225 548 B1, WO 2020/055848 A1, US 2007/186477 A1.

Most carriers strive to offer a consistent passenger experience within each cabin class, and even more so within premium seating classes where passengers expect comforts and features commensurate with the fares paid. For example, passengers expect consistency in terms of comfort, seat adjustability, living space, privacy, amenities, climatization, direct aisle access, etc. While most features and comforts can be made consistent throughout a cabin class, some cannot as a consequence of inherent vehicle design.

Direct access to an exterior window is one such feature that cannot be made consistent throughout an airliner, particularly in widebody aircraft equipped with center seats. As a result, interior seats without an exterior window tend to feel darker, smaller, and more confining without direct access to natural light.

Therefore, to increase the desirability of interior seats, what is needed is a suite feature that creates the illusion of open space and natural light, thereby psychologically extending the seat boundaries.

### BRIEF SUMMARY

In one aspect, there is provided an interior passenger suite for a vehicle such as an airliner. In embodiments, the passenger suite includes interior walls defining an interior space, a passenger seat positioned in the interior space, an entrance positioned through one of the interior walls, and a window assembly. In embodiments, the window assembly includes a window frame mounted to one of the interior walls and defining a window opening, a window shade mounted to the window frame, at least one light source mounted to the window frame, the at least one light source configured to direct light toward the window opening, and a controller configured to operate the window shade and the at least one light source.

In some embodiments, the window shade is configured to operate vertically within the window frame, and the at least one light source is mounted to at least one of a lateral side of the window frame, a top of the window frame, and a bottom of the window frame.

In some embodiments, the window shade is configured to operate horizontally within the frame, and the at least one light source is mounted to at least one of a lateral side of the window frame, a top of the window frame, and a bottom of the window frame.

In some embodiments, the controller is configured to render the at least one light source inoperable when the window shade is not covering the window opening.

In some embodiments, the window shade is translucent.

In some embodiments, the window assembly does not include a windowpane.

In some embodiments, the controller is part of a passenger seat controller.

In some embodiments, the controller is configured to operate the at least one light source, when the window shade is covering the window opening, to mimic daylight lighting conditions outside of the vehicle.

According to another aspect, there is provided a configuration of interior passenger suites for a vehicle. In embodiments, the suite configuration includes a first passenger suite and a second passenger suite positioned adjacent to the first passenger suite. In embodiments, each of the first and second passenger suites includes interior walls defining an interior space, a passenger seat positioned in the interior space, an entrance positioned through one of the interior walls, and window assembly. In embodiments, the window assembly includes a window frame mounted to one of the interior walls, the window frame defining a window opening, a window shade mounted to the window frame, at least one light source mounted to the window frame, the at least one light source configured to direct light toward the window opening, and a controller configured to operate the window shade and the at least one light source.

In some embodiments, the window opening of the first passenger suite is positioned directly adjacent to and aligned with the window opening of the second passenger suite.

In some embodiments, for each of the first passenger suite and the second passenger suite, the window shade is configured to operate vertically within the window frame, and the at least one light source is mounted to at least one of a lateral side of the window frame, a top of the window frame, and a bottom of the window frame.

In some embodiments, for each of the first passenger suite and the second passenger suite, the window shade is configured to operate horizontally within the frame, and the at least one light source is mounted to at least one of a lateral side of the window frame, a top of the window frame, and a bottom of the window frame.

In some embodiments, for each of the first passenger suite and the second passenger suite, the controller is configured to render the at least one light source inoperable when the window shade is not covering the window opening.

In some embodiments, for each of the first passenger suite and the second passenger suite, the window shade is translucent, the window assembly does not include a windowpane, and the controller is configured to operate the at least one light source, when the window shade is covering the window opening, to mimic daylight lighting conditions outside of the vehicle.

According to a further aspect, there is provided a configuration of interior passenger suites for a vehicle such as an airliner. In embodiments, the configuration of suites includes a first passenger suite and a second passenger suite separated by a shared interior wall. The configuration further includes a window assembly including a window frame mounted to the shared wall, the window frame defining a window opening, a first window shade mounted to the window frame, a second window shade mounted to the window frame, at least one light source mounted to the window frame, the at least one light source configured to direct light toward the window opening, a first controller positioned in the first passenger suite and configured to operate the first window shade and the at least one light source, and a second controller positioned in the second passenger suite and configured to operate the second window shade and the at least one light source.

In some embodiments, the first window shade is configured to operate vertically within the window frame, the second window shade is configured to operate vertically within the window frame, and the at least one light source is mounted to at least one of a lateral side of the window frame, a top of the window frame, and a bottom of the window frame.

In some embodiments, the first controller is configured to render the at least one light source inoperable when the first window shade is not covering the window opening, and the second controller is configured to render the at least one light source inoperable when the second window shade is not covering the window opening.

In some embodiments, the first window shade is translucent, the second window shade is translucent, and the window assembly does not include a windowpane.

In some embodiments, the first controller and the second controller are communicatively linked such that at least one of the first controller and the second controller is configured to operate the at least one light source, when the each of the first and second window shades is covering the window opening, to mimic daylight lighting conditions outside of the vehicle.

In some embodiments, the first controller and the second controller are communicatively linked such that each of the first controller and the second controller is configured to prevent the other of the first controller and the second controller from operating the at least one light source.

This summary is provided solely as an introduction to subject matter that is fully described in the following detailed description and drawing figures. It is to be understood that both the foregoing summary and the following detailed description are explanatory only and the scope of the invention is defined by the claims.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a perspective view into an interior passenger suite including an interior window assembly, in accordance with example embodiments of this disclosure;
FIG. 2 is a perspective view of the interior window assembly showing at least one light source configured to illuminate the drawn window shade, in accordance with example embodiments of this disclosure;
FIG. 3 is a perspective view of a configuration of passenger suites showing the window shades drawn, in accordance with example embodiments of this disclosure;
FIG. 4 is a perspective view of the configuration of passenger suites showing at least one of the window shades partially open, in accordance with example embodiments of this disclosure;
FIG. 5 is a perspective view of the configuration of passenger suites showing the window shades fully open, in accordance with example embodiments of this disclosure; and
FIG. 6 is a perspective view of the configuration of passenger suites showing a double window shade configuration showing one window shade partially open and the adjacent window shade closed.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways within the scope of the claims. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein.

Broadly, embodiments of the inventive concepts disclosed herein are directed to passenger suites for a vehicle such as an airliner. In some embodiments, the passenger suites are interior suites positioned apart from an exterior wall of the vehicle such that the suites lack direct access to an exterior window. In embodiments, the suites are defined by a plurality of interior walls, at least one of which includes an interior window that opens to an aisle or another suite within the vehicle. In embodiments, the window does not include a windowpane such that the window provides an opening into an adjacent suite having a shared wall or aligned window. The passenger suites further include a window shade configured to selectively cover and expose the window. In embodiments, the window shade is made from a translucent, semi-transparent, or like material such that a light source directed toward the window shade is configured to illuminate the window shade from the side or from behind to emulate natural light originating from behind/outside the window.

Benefits and advantages of the suites and window assemblies disclosed herein include, but are not limited to, an increase in perceived size and space of the suite interior, the ability of the passenger to selectively enhance and relax privacy, the ability of the passenger to selectively brighten and darken their suite, a less confined feeling suite, and the ability to open line of sight and communication between adjacent interior suites. By incorporating an interior window assembly into an interior/center suite, and providing a window shade configured to be illuminated in a natural manner, all suites within the same cabin area can be designed to have a similar look, feeling, and level of comfort regardless of their position within the cabin.

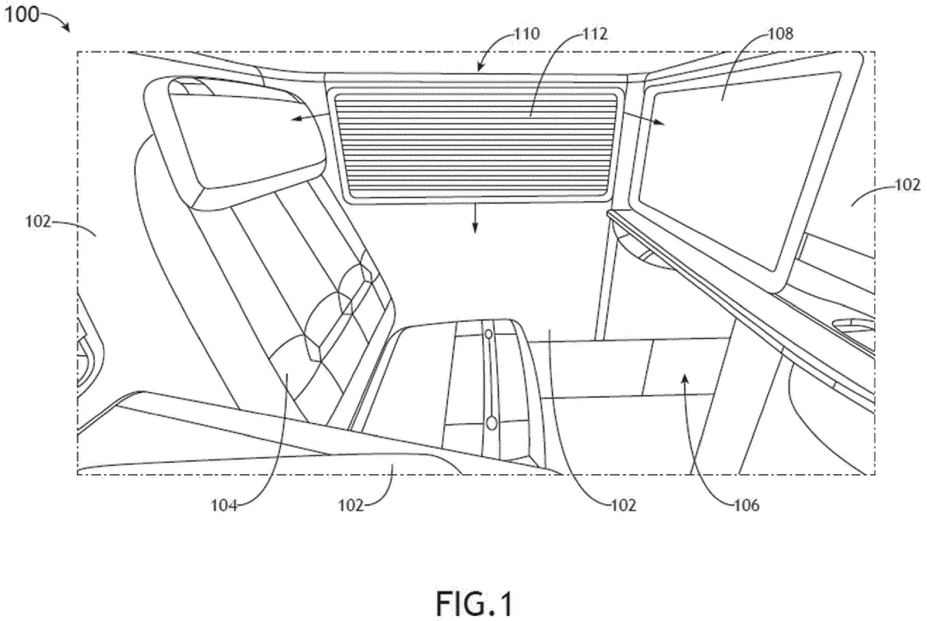

FIG. 1 illustrates an interior passenger suite 100 according to the present disclosure. The suite 100 is configured to be positioned in a vehicle apart from an exterior wall of the vehicle, or at the least include at least one interior wall. For example, the suite 100 may be positioned centered in the vehicle, adjacent to a center longitudinal aisle in an aircraft, between spaced longitudinal aisles in a widebody aircraft, etc.

The suite 100 generally includes a plurality of interior walls 102 defining an interior space. At least one passenger seat 104 is positioned in the interior space. The passenger seat 104 may be capable of adjusting between various sitting positions, such as upright for taxi, takeoff, and landing (TTOL), lie flat during flight, and various intermediate sitting positions. As shown, the passenger seat 104 is positioned against one wall and faces a footwell 106 and an in-flight entertainment device 108 respectively formed in and mounted to an opposite wall.

The suite 100 includes an interior window assembly 110. As shown, the interior window assembly 110 is mounted to an interior wall positioned to one side of the passenger seat 104. In some embodiments, the interior window assembly 110 may be scaled and shaped to resemble that of an exterior window of the vehicle for consistency throughout the cabin. In other embodiments, the interior window assembly 110 may be scaled larger than a fuselage window considering the interior window could be considered cosmetic and not structural. As used herein, the term "interior" with regard to the window assembly 110 means without opening to the exterior of the vehicle, for instance interior may mean positioned within the vehicle cabin and open to an aisle or other suite. For contrast and comparison, an exterior window would be positioned in an exterior wall, for instance the fuselage wall, to view outside the vehicle. The window assembly 110 includes a window shade 112. In FIG. 1, the window shade is shown closed, wherein "closed" is synonymous with drawn, deployed, lowered, etc. In use, the window shade 112 is configured to be selectively adjusted between fully open, fully closed, and partially open or partially closed, wherein "open" is synonymous with retracted, stowed, raised, etc. As discussed in detail below and intended to be indicated by the directional arrows emanating from the window assembly 110, at least one light source is associated with the window shade 112 to illuminate the window shade 112 to give the appearance of natural light originating from the behind the window. In other words, mimic the appearance of an exterior window during daylight hours.

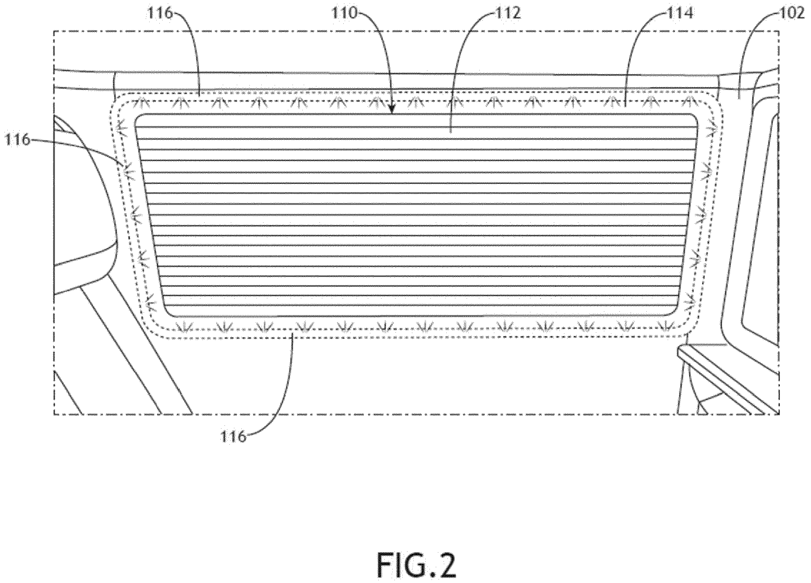

FIG. 2 illustrates an embodiment of the interior window assembly 110. As shown, the window shade 112 is pleated and configured to operate vertically (e.g., raise and lower) within a window frame 114. The window frame 114 defines a window opening. The window assembly 110 is installed in an interior wall 102, for instance an interior wall alongside a passenger seat. In some embodiments, the interior window assembly 110 does not include a windowpane, such that when the window shade 112 is open, at least a portion of the suite can be made open to an aisle, another passenger suite, etc.

The window assembly 110 further includes at least one light source 116 mounted to or positioned relative to the window frame 114. For example, the at least one light source 116 may be mounted to any of the lateral sides, top, and bottom of the window frame 114. The at least one light source 116 is directed toward the window shade 112, such that when the window shade 112 is closed, the window shade 112 is capable of being illuminated by the at least one light source 116. The at least one light source 116 may be mounted to the interior wall 102 or elsewhere to direct light toward the window shade 112. In some embodiments, the at least one light source 116 is mounted to both lateral side of the window frame 114 in order to edge light the window shade 112, above and/or below the window shade 112 in order to top and/or bottom light the window shade 112, external to the interior wall 102 in order to wash light over the closed window shade 112, behind the window shade in order to illuminate the window shade 112 from behind, elsewhere, or a combination of any of the foregoing. In embodiments, the at least one light source 116 is configured to illuminate the closed window shade 112 in order to emulate natural light originating from behind the window shade 112 to provide the impression of an exterior window. Suitable examples of light sources include, but are not limited to, strip lighting, spot lighting, etc.

In embodiments, the window shade 112 may be made from translucent, semi-transparent, partially opaque, the like, and other materials configured to maintain privacy while admitting diffuse light when fully deployed. In some embodiments, the window shade 112 may be made from fabrics, films, etc., and may be pleated as shown. Mechanisms for selectively raising and lowering the window shade 112 may be conventional, for instance mechanisms including motors, gears, belts, and rotating shafts located in the interior wall 102. While the window shade 112 is shown throughout the figures as raising and lowering vertically, it is envisioned and intended that the window assembly 110 can be mounted 90 degrees rotated to the orientation shown such that the window shade 112 operates horizontally within the window frame 114.

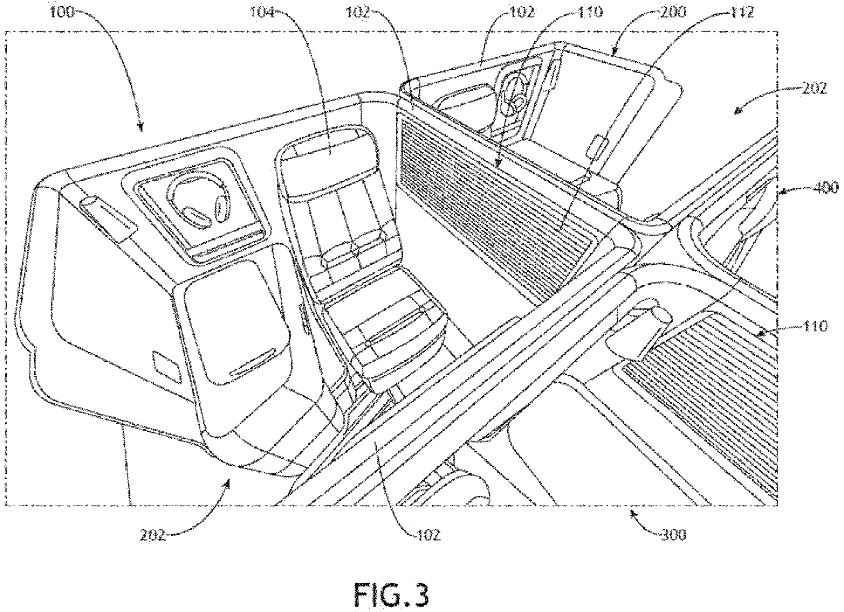

FIG. 3 illustrates a configuration of interior suites for passenger cabin, for instance a business class cabin in an airliner. In embodiments, the configuration includes at least a first interior suite 100 and a second interior suite 200 positioned adjacent to the first interior suite 100. In some embodiments, the first and second interior suites 100, 200 share at least one interior wall 102. In other embodiments, the first and second suites 100, 200 may include separate interior walls 102, 102 positioned together and/or attached. Each interior suite 100, 200 includes a dedicated entrance 202 into the respective suite, for instance through an interior wall 102 providing direct access from an aisle. As shown, the entrance 202 is positioned on the interior wall 102 opposite the interior wall 102 including the window assembly 110, and the seat 104 is positioned facing a third interior wall 102 and alongside the interior wall 102 including the window assembly 110.

The first and second interior suites 100, 200 are arranged such that the window assemblies 110 of the suites align, or a single window assembly 110 is shared between the two suites. In some embodiments, the cabin configuration includes a third suite 300 and a fourth suite 400, wherein the third and fourth suites 300, 400 are aligned similar to the first and second suites 100, 200, the third suite 300 is adjacent and may share a wall with the first suite 100, and the fourth suite 200 is adjacent and may share a wall with the second suite 200. Thus, in some embodiments a four-suite configuration is provided. Interior window assemblies 110 may be aligned or shared between the third and fourth suites 300, 400. In some embodiments, additional interior window assemblies 110 may be aligned or shared between the first and third suites 100, 300, and the second and fourth suites 200, 400 for multi-direction conferencing.

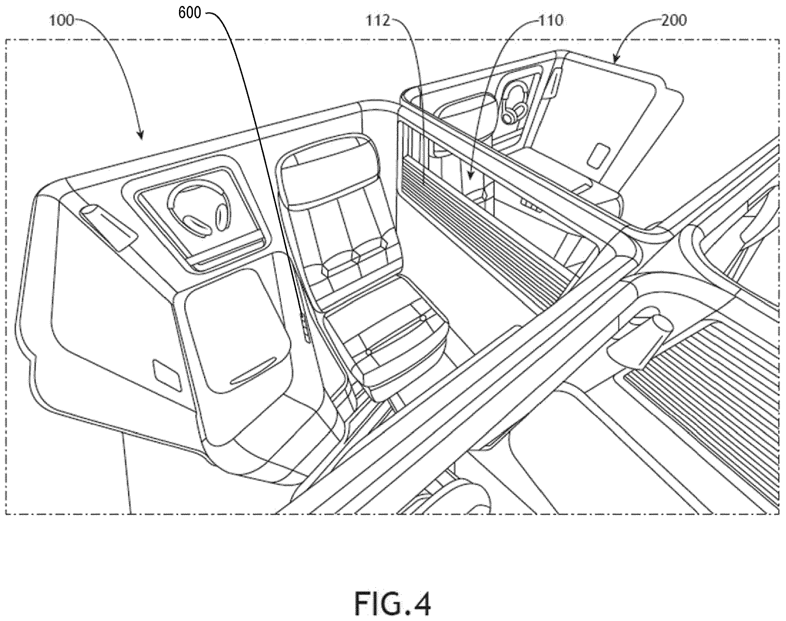

FIG. 4 illustrates the up to four-suite configuration wherein the window shade 112 associated with the first suite 100, or a single window shade 112 shared between the first and second suites 100, 200, is retracted downwardly to open a portion of the window opening.

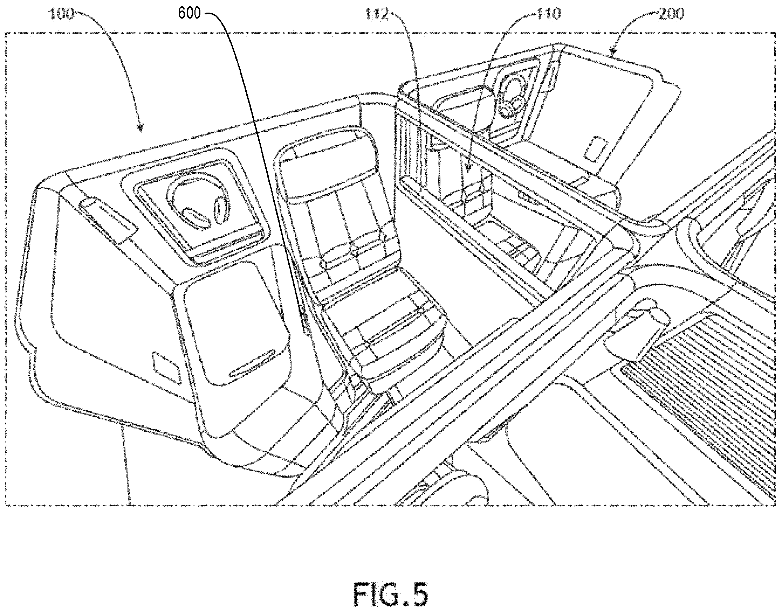

FIG. 5 illustrates the up to four-suite configuration wherein the window shade 112 associated with the first suite 100, or a single window shade 112 shared between the first and second suites 100, 200, is fully retracted to fully open the window opening. In some embodiments, when the window shade 112 is retracted, at least partially, the at least one light source may be made inoperable.

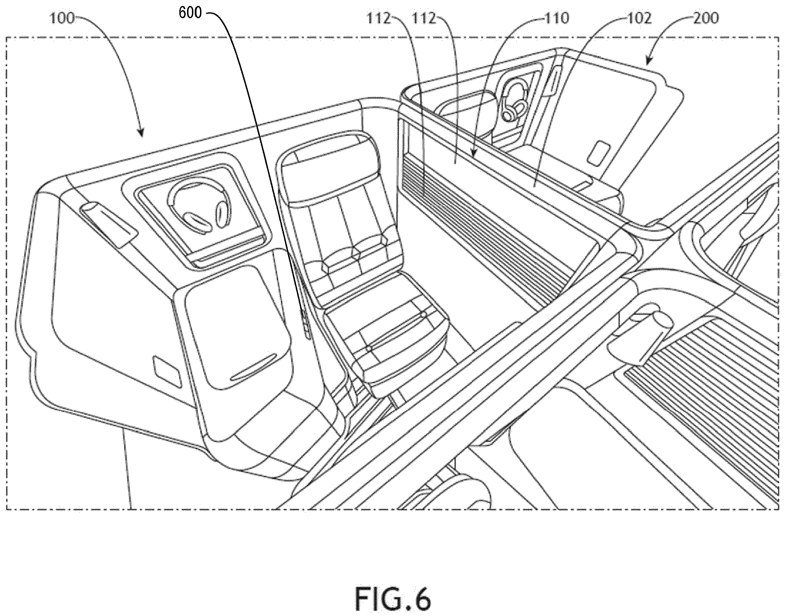

FIG. 6 illustrates the up to four-suite configuration wherein the window shade 112 associated with the first suite 100 is partially retracted downwardly and the window shade 112 associated with the second suite 200 is fully closed. In embodiments, each passenger has the ability to selectively control the position and illumination of their own window shade 112. Thus, the passenger in suite 100 may choose to retract and/or illuminate their window shade independent of the control aspect of the passenger in suite 200. Thus, as shown in FIG. 6, the window shade 112 associated with suite 200 is fully deployed and therefore may also be illuminated in this position.

The operation of the window shade 112 and at least one light source 116 may be selectively controllable via a controller 600 located within the suite, for instance within reach of the seated passenger as shown. The controller 600 may be collocated or may be a part of other seat and/or suite controls, for instance seat adjustment controls, entertainment controls, climatization controls, etc. In some embodiments, the controller 600 may be located on the interior wall 102 proximal to the window assembly 110.

In some embodiments, the controller 600 may be configured to raise, lower, illuminate, coordinate movements, etc. of the window shade(s) 112. For example, the controller 600 may be configured to deactivate the illumination feature when the window shade 112 is retracted from the fully closed position, and enable the illumination feature when the window shade 112 is in the fully closed position. The controller 600 may be further configured to adjust the color and/or intensity of the at least one light source depending on the capabilities of the at least one light source. In some embodiments, the operation of the light source and position of the window shade may be coordinated with the time of day and/or ambient conditions. In some embodiments, the controller 600 may be programmable. In some embodiments, the controller 600 may not be made available to the passenger and is instead programmable by the carrier.

Functionalities of the controller 600 may be vast and programmable. For example, the controller 600 may be configured to render the at least one light source inoperable when the window shade 112 is not covering the window opening. In some embodiments, the controller 600 is operable to control the at least one light source, when the window shade is covering the window opening, to mimic daylight lighting conditions outside of the vehicle.

In embodiments in which a single window assembly 110 equipped with two window shades 112, each serving a respective suite and independently controllable, a first controller 600 may be configured to render the at least one light source inoperable when the first window shade 112 is not covering the window opening, and a second controller 600 may be configured to render the at least one light source inoperable when the second window shade is not covering the window opening. In some embodiments in which a single window assembly 110 is shared or two window assemblies 110 are positioned aligned, the first controller 600 and the second controller 600 may be communicatively linked such that at least one of the first controller 600 and the second controller 600 is configured to operate the at least one light source, when each of the first and second window shades 112 is covering the window opening, to mimic daylight lighting conditions outside of the vehicle. In some embodiments, the first controller 600 and the second controller 600 may be communicatively linked such that each of the first controller 600 and the second controller 600 is configured to prevent the other of the first controller 600 and the second controller 600 from operating the at least one light source. In other words, the controllers 600 may be configured with a "lock-out" function.

Each controller 600 may include at least one processor, memory, and a communication interface. The processor provides processing functionality for at least the controller 600 and may include any number of processors, micro-controllers, circuitry, field programmable gate array (FPGA) or other processing systems, and resident or external memory for storing data, executable code, and other information accessed or generated by the controller. The processor may execute one or more software programs embodied in a non-transitory computer readable medium (e.g., memory) that implements techniques described herein. The processor is not limited by the materials from which it is formed, or the processing mechanisms employed therein and, as such, can be implemented via semiconductor(s) and/or transistors (e.g., using electronic integrated circuit (IC) components), and so forth.

The memory may be an example of tangible, computer-readable storage medium that provides storage functionality to store various data and/or program code associated with operation of the controller/processor, such as software programs and/or code segments, or other data to instruct the processor, and possibly other components of the controller, to perform the functionality described herein. Thus, the memory can store data, such as a program of instructions for operating the controller 600, including its components (e.g., processor, communication interface, etc.), and so forth. It should be noted that while a single memory is described, a wide variety of types and combinations of memory (e.g., tangible, non-transitory memory) may be employed. The memory may be integral with the processor, may comprise stand-alone memory, or may be a combination of both. Some examples of the memory may include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The communication interface may be operatively configured to communicate with components of the controller 600. For example, the communication interface may be configured to retrieve data from the processor or other devices, transmit data for storage in the memory, retrieve data from storage in the memory, and so forth. The communication interface may also be communicatively coupled with the processor to facilitate data transfer between components of the controller and the processor. It should be noted that while the communication interface is described as a component of the controller 600, one or more components of the communication interface may be implemented as external components communicatively coupled to the controller 600 via a wired and/or wireless connection. The controller 600 may also include and/or connect to one or more input/output (I/O) devices (e.g., human machine interface (HMI) devices) via the communication interface. In embodiments, the communication interface may include a transmitter, receiver, transceiver, physical connection interface, or any combination thereof.

From the above description, it is clear that the inventive concepts disclosed herein are well adapted to achieve the objectives and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are within the scope of the claims.

## Claims

1. An interior passenger suite (100) for a vehicle, comprising:
interior walls (102) defining an interior space;
a passenger seat (104) positioned in the interior space;
an entrance (202) positioned through one of the interior walls; and
a window assembly (110) comprising
a window frame (114) mounted to one of the interior walls, the window frame defining a window opening; **characterised by** the window assembly comprising:
a window shade (112) mounted to the window frame;
at least one light source (116) mounted to the window frame, the at least one light source configured to direct light toward the window opening; and
a controller (600) configured to operate the window shade and the at least one light source.

2. The interior passenger suite (100) according to claim 1, wherein:
the window shade (112) is configured to operate vertically within the window frame (114); and
the at least one light source (116) is mounted to at least one of a lateral side of the window frame, a top of the window frame, and a bottom of the window frame.

3. The interior passenger suite (100) according to claim 1, wherein:
the window shade (112) is configured to operate horizontally within the window frame (114); and
the at least one light source (116) is mounted to at least one of a lateral side of the window frame, a top of the window frame, and a bottom of the window frame.

4. The interior passenger suite (100) according to any preceding claim, wherein the controller (600) is configured to render the at least one light source inoperable when the window shade is not covering the window opening.

5. The interior passenger suite (100) according to any preceding claim, wherein the window shade (112) is translucent.

6. The interior passenger suite (100) according to any preceding claim, wherein the window assembly (110) does not include a windowpane.

7. The interior passenger suite (100) according to any preceding claim, wherein the controller (600) is part of a passenger seat controller.

8. The interior passenger suite (100) according to any preceding claim, wherein the controller (600) is configured to operate the at least one light source, when the window shade is covering the window opening, to mimic daylight lighting conditions outside of the vehicle.

9. A configuration of interior passenger suites for a vehicle, comprising:
a first passenger suite (100); and
a second passenger suite (200) positioned adjacent to the first passenger suite;
each of the first and second passenger suites being an interior passenger suite as claimed in any preceding claim.

10. The configuration of interior passenger suites according to claim 9, wherein the window opening of the first passenger suite (100) is positioned directly adjacent to and aligned with the window opening of the second passenger suite (200).

## Patentansprüche

1. Innere Passagiersuite (100) für ein Fahrzeug, umfassend:
Innenwände (102), die einen Innenraum definieren;
einen im Innenraum angeordneten Passagiersitz (104);
einen Eingang (202), der durch eine der Innenwände hindurch angeordnet ist; und
eine Fensterbaugruppe (110), umfassend
einen an einer der Innenwände befestigten Fensterrahmen (114), wobei der Fensterrahmen eine Fensteröffnung definiert; **dadurch gekennzeichnet, dass** die Fensterbaugruppe umfasst:
ein an dem Fensterrahmen befestigtes Fensterrollo (112);
mindestens eine an dem Fensterrahmen befestigte Lichtquelle (116), wobei die mindestens eine Lichtquelle dazu konfiguriert ist, Licht auf die Fensteröffnung zu richten; und
eine Steuerung (600), die dazu konfiguriert ist, das Fensterrollo und die mindestens eine Lichtquelle zu betätigen.

2. Innere Passagiersuite (100) nach Anspruch 1, wobei:
das Fensterrollo (112) dazu konfiguriert ist, sich vertikal innerhalb des Fensterrahmens (114) zu bewegen; und
die mindestens eine Lichtquelle (116) an mindestens einem von einer seitlichen Seite des Fensterrahmens, einer Oberseite des Fensterrahmens und einer Unterseite des Fensterrahmens befestigt ist.

3. Innere Passagiersuite (100) nach Anspruch 1, wobei:
das Fensterrollo (112) dazu konfiguriert ist, sich horizontal innerhalb des Fensterrahmens (114) zu bewegen; und
die mindestens eine Lichtquelle (116) an mindestens einem von einer seitlichen Seite des Fensterrahmens, einer Oberseite des Fensterrahmens und einer Unterseite des Fensterrahmens befestigt ist.

4. Innere Passagiersuite (100) nach einem der vorhergehenden Ansprüche, wobei die Steuerung (600) dazu konfiguriert ist, die mindestens eine Lichtquelle außer Betrieb zu setzen, wenn das Fensterrollo die Fensteröffnung nicht abdeckt.

5. Innere Passagiersuite (100) nach einem der vorhergehenden Ansprüche, wobei das Fensterrollo (112) lichtdurchlässig ist.

6. Innere Passagiersuite (100) nach einem der vorhergehenden Ansprüche, wobei die Fensterbaugruppe (110) keine Fensterscheibe aufweist.

7. Innere Passagiersuite (100) nach einem der vorhergehenden Ansprüche, wobei die Steuerung (600) Teil einer Passagiersitzsteuerung ist.

8. Innere Passagiersuite (100) nach einem der vorhergehenden Ansprüche, wobei die Steuerung (600) dazu konfiguriert ist, die mindestens eine Lichtquelle, wenn das Fensterrollo die Fensteröffnung abdeckt, so zu betätigen, dass sie Tageslichtverhältnisse außerhalb des Fahrzeugs nachahmt.

9. Konfiguration von inneren Passagiersuiten für ein Fahrzeug, umfassend:
eine erste Passagiersuite (100); und
eine zweite Passagiersuite (200), die benachbart zu der ersten Passagiersuite angeordnet ist;
wobei jede von der ersten und der zweiten Passagiersuite eine innere Passagiersuite nach einem der vorhergehenden Ansprüche ist.

10. Konfiguration von inneren Passagiersuiten nach Anspruch 9, wobei die Fensteröffnung der ersten Passagiersuite (100) direkt benachbart zu der Fensteröffnung der zweiten Passagiersuite (200) angeordnet und mit dieser fluchtend ausgerichtet ist.

## Revendications

1. Suite de passagers intérieure (100) d'un véhicule, comprenant :
des parois intérieures (102) définissant un espace intérieur ;
un siège passager (104) positionné dans l'espace intérieur ;
une entrée (202) située dans l'une des parois intérieures ; et
un ensemble de fenêtre (110) comprenant
un cadre de fenêtre (114) monté sur l'une des parois intérieures, le cadre de fenêtre définissant une ouverture de fenêtre ;
**caractérisé en ce que** l'ensemble de fenêtre comprend :
un store (112) monté sur le cadre de fenêtre ;
au moins une source lumineuse (116) montée sur le cadre de fenêtre, l'au moins une source lumineuse étant configurée pour diriger la lumière vers l'ouverture de fenêtre ; et
un dispositif de commande (600) configuré pour actionner le store et l'au moins une source lumineuse.

2. Suite de passagers intérieure (100) selon la revendication 1, dans laquelle :
le store (112) est configuré pour être actionné verticalement à l'intérieur du cadre de fenêtre (114) ; et
l'au moins une source lumineuse (116) est montée sur au moins l'un d'un côté latéral du cadre de fenêtre, d'une partie supérieure du cadre de fenêtre et d'une partie inférieure du cadre de fenêtre.

3. Suite de passagers intérieure (100) selon la revendication 1, dans laquelle :
le store (112) est configuré pour être actionné horizontalement à l'intérieur du cadre de fenêtre (114) ; et
l'au moins une source lumineuse (116) est montée sur au moins l'un d'un côté latéral du cadre de fenêtre, d'une partie supérieure du cadre de fenêtre et d'une partie inférieure du cadre de fenêtre.

4. Suite de passagers intérieure (100) selon une quelconque revendication précédente, dans laquelle le dispositif de commande (600) est configuré pour rendre l'au moins une source lumineuse inopérante lorsque le store ne couvre pas l'ouverture de fenêtre.

5. Suite de passagers intérieure (100) selon une quelconque revendication précédente, dans laquelle le store (112) est translucide.

6. Suite de passagers intérieure (100) selon une quelconque revendication précédente, dans laquelle l'ensemble de fenêtre (110) ne comporte pas de vitre.

7. Suite de passagers intérieure (100) selon une quelconque revendication précédente, dans laquelle le dispositif de commande (600) fait partie d'un dispositif de commande de siège passager.

8. Suite de passagers intérieure (100) selon une quelconque revendication précédente, dans laquelle le dispositif de commande (600) est configuré pour actionner l'au moins une source lumineuse, lorsque le store couvre l'ouverture de fenêtre, afin de simuler les conditions d'éclairage naturel à l'extérieur du véhicule.

9. Configuration de suites de passagers intérieures d'un véhicule, comprenant :
une première suite de passagers (100) ; et
une seconde suite de passagers (200) située à côté de la première suite de passagers ;
chacune des première et seconde suites de passagers étant une suite de passagers intérieure selon une quelconque revendication précédente.

10. Configuration de suites de passagers intérieures selon la revendication 9, dans laquelle l'ouverture de fenêtre de la première suite de passagers (100) est positionnée directement à côté et dans l'alignement de l'ouverture de fenêtre de la seconde suite de passagers (200).
